# EUROPÄISCHE PATENTANMELDUNG

(11) **EP 2 353 465 A1**
(43) Veröffentlichungstag der Anmeldung: **10.08.2011**
(21) Anmeldenummer: 11153311.3
(22) Anmeldetag: 04.02.2011
(51) Int. Cl.: A47J 27/00, A47J 27/18, A47J 27/64

(54) **Kochgerät für Pasta oder Teigwaren**

(30) Priorität: 05.02.2010 DE 102010000327
(71) Anmelder: Maier, Max, 71636 Ludwigsburg (DE)
(72) Erfinder: Maier, Max, 71636 Ludwigsburg (DE)
(74) Vertreter: Menges, Rolf

(57) **Zusammenfassung**

Beschrieben ist ein Kochgerät (10) für Pasta oder Teigwaren, mit einem Becken (12), das mit Wasser befüllbar ist. Unter dem Becken (12) ist eine regelbare Heizeinrichtung angebracht. Das Becken (12) ist mit einem Deckel (30) verschließbar. Eine Hubeinheit (40) dient zum Absenken eines Korbes (50) in das Becken (12) und zum Hochfahren des Korbes aus dem Becken (12). Der Deckel (30) hat einen Klappmechanismus, der mit der Hubeinheit (40) gekuppelt ist, so dass mit dem Absenken des Korbes (50) der Deckel (30) auf den Korb (50) klappbar und mit dem Hochfahren des Korbes (50) der Deckel (30) von dem Korb (50) hochklappbar ist. Bei hochgeklapptem Deckel (30) ist der Inhalt des Korbes (50) sichtbar und der Korb (50) einfach handhabbar.

## Beschreibung

Die Erfindung betrifft ein Kochgerät für Pasta oder Teigwaren, mit einem Becken, das mit Wasser befüllbar ist, mit einer dem Becken zugeordneten regelbaren Heizeinrichtung, mit einem Deckel zum Verschließen des Beckens und mit einer Hubeinheit zum gemeinsamen Absenken eines Korbes und des Deckels in bzw. auf das Becken sowie zum gemeinsamen Hochfahren des Korbes und des Deckels aus bzw. von dem Becken.

Es ist ein Pasta- oder Teigwarenkochgerät bekannt (EP 1 736 085 B1 ), das als Becken eine Art Topf mit angebauter Hubeinheit hat, mit welcher der Korb an seinem äußeren Rand gekuppelt ist. Bei diesem bekannten Kochgerät ist zwar ein Deckel vorhanden, der auf das Becken aufgesetzt wird, es ist dem Benutzer des Kochgerätes aber freigestellt, ob er den Deckel auf das Becken aufsetzt oder nicht. In diesem Dokument wird auf das Dokument US 2003/192435 Bezug genommen. Mit Bezug auf dieses Dokument wird sogar als Nachteil herausgestellt, dass bei der daraus bekannten Konstruktion für die Dampfmessung mittels eines Dampfdetektors das Vorhandensein eines das Becken verschlie-βenden Deckels erforderlich sei. Dieses Dokument zeigt im Übrigen ebenfalls ein Pastakochgerät, bei dem es auch dem Benutzer überlassen bleibt, den Deckel aufzusetzen oder nicht. Bei solchen Pastakochgeräten ist der energetische Wirkungsgrad schlecht, wenn ohne Deckel gearbeitet wird. Trotzdem wird bei professionellen Pastakochgeräten, soweit es dem Anmelder bekannt ist, grundsätzlich ohne Deckel gearbeitet, so zum Beispiel bei einem Hochleistungspastakocher mit automatischem Korbhubsystem, der aus der Firmenddruckschrift "Etectrotux - Creator of Professional Kitchens", A World of Solutions at Gulfood 2009, Stand ZB22 - February 23 ― 26, S. 5, bekannt ist, oder bei einem ähnlichen Kochgerät gemäß der Gebrauchsmusterschrift DE 20 2008 001 816 U1, wobei aber das letztgenannte Kochgerät weder einen Korb, noch einen Deckel, noch eine Hubeinheit aufweist. Zusätzlich zu der mangelnden Energieeffizienz ist nachteilig, dass bei während des Kochens nicht durch einen Deckel verschlossenem Becken Wasser als Dampf entweicht, der die Umgebung befeuchtet, was üblicherweise auch nicht erwünscht ist. Darüber hinaus muss das als Dampf entwichene Wasser nachgefüllt werden, was den energetischen Wirkungsgrad weiter verschlechtert, denn das nachzufüllende Wasser muss auch auf Kochtemperatur erhitzt werden.

Ein Kochgerät der eingangs genannten Art, das aber zum Braten von Hühnchen bestimmt ist, ist aus dem Dokument US 3 690 246 A bekannt. Bei diesem bekannten Kochgerät werden der Korb und ein Deckel durch eine Hubeinheit, mit der sie gekuppelt sind, gemeinsam abgesenkt und gemeinsam hochgefahren, wobei der Abstand zwischen dem Deckel und dem Korb aber stets derselbe bleibt. Der Deckel behindert bei diesem bekannten Kochgerät die Sicht auf den Inhalt des Korbes und ist auch sonst hinderlich, wenn der Korb separat von dem Deckel gehandhabt werden soll, wie es bei dem Einsatz des Kochgerätes der eingangs genannten Art für Pasta oder Teigwaren erforderlich ist.

Aufgabe der Erfindung ist es, bei einem Kochgerät der eingangs genannten Art nicht nur die Energieeffizienz zu verbessern, sondern auch die Handhabbarkeit des Korbes zu erleichtern.

Diese Aufgabe ist erfindungsgemäß dadurch gelöst, dass der Deckel mit der Hubeinheit so gekuppelt und die Hubeinheit so ausgebildet ist, dass mittels der Hubeinheit der Deckel auf den Korb klappbar und von dem Korb hochklappbar ist. Das gewährleistet nicht nur eine effiziente Nutzung der bei dem Betrieb des Kochgerätes für Pasta oder Teigwaren eingesetzten Energie, weil es nicht länger in das Belieben des Benutzers gestellt ist, ob er das Becken des Kochgerätes während des Kochens mit dem Deckel verschließt oder nicht, sondern es erleichtert auch das Arbeiten mit dem Korb, weil bei hochgefahrenem Korb der Deckel stets aufgeklappt ist und so weder die Sicht auf den Korbinhalt noch die Handhabbarkeit des Korbes behindert.

Das Kochgerät nach der Erfindung kann wie das Kochgerät nach der oben erwähnten Gebrauchsmusterschrift DE 20 2008 001 816 U1 auch zum Dämpfen oder Dampfgaren eingesetzt werden. Dafür braucht lediglich das Becken bis zu einer geringen Füllhöhe befüllt zu werden und das so eingefüllte Wasser durch ausreichende Erhitzung in Dampf verwandelt zu werden. Bei diesem Einsatz ist es wichtig, dass das Becken durch den Deckel im Betrieb grundsätzlich verschlossen ist. Andernfalls könnte der Benutzer mit Heißdampf in Berührung kommen und verletzt werden. Bei dem Kochgerät nach der Erfindung ist gewährleistet, dass bei abgesenktem Korb, der sich beim Dämpfen oberhalb des niedrigen Wasserspiegels in dem Becken befindet, das Becken durch den Deckel stets geschlossen ist. Bei geschlossenem Deckel läuft der Koch-, Dämpf-oder Dampfgarprozess kontrolliert und energieeffizient ab. Es braucht lediglich auf übliche Weise die Kochtemperatur geregelt zu werden, was bei geschlossenem Deckel gut zu realisieren ist.

Der zwangsgesteuerte Deckel des Kochgerätes nach der Erfindung gewährleistet, dass stets mit niedrigem Energieaufwand effizient gekocht wird. Die Schaumbildung bei dem Kochen von Pasta oder Teigwaren führt häufig zu einer Schaumbildung. Im Stand der Technik wird danach getrachtet, die Schaumbildung durch Absaugen des Schaums zu kontrollieren. Das Dokument DE 694 12 416 T2 befasst sich damit, bei einem Kocher für Teigwaren die Probleme des Stärkeschaums und Abflussverstopfens zu minimieren. Zu diesem Zweck wird bei dem bekannten Kocher Stärkeschaum von der oberen Oberfläche des Wassers kontinuierlich entfernt. Dafür ist eine spezielle Abflussrinne vorgesehen und das Abwasser vom Kochen wird gefiltert, um Stärkeschaum und Teigwarenpartikel zu entfernen und so die Wahrscheinlichkeit eines Abflussverstopfens zu minimieren. Bei dem Kochgerät nach der Erfindung hingegen sorgt der im Betrieb stets geschlossene Deckel dafür, dass die Energiezufuhr so kontrolliert werden kann, dass es zu nur minimaler Schaumbildung kommt. Das Kochgerät nach der Erfindung wird zwar bevorzugt als ein automatisches Pastakochgerät ausgebildet, es sind jedoch Vorkehrungen getroffen, dass die Hubeinheit auch von Hand bewegt und das Kochgerät somit manuell betätigt werden kann. Dabei sind aber Vorkehrungen getroffen, dass der Kochvorgang nur gestartet werden kann, wenn der Deckel tatsächlich geschlossen ist.

Vorteilhafte Ausgestaltungen der Erfindung bilden die Gegenstände der abhängigen Ansprüche.

In einer Ausgestaltung des Kochgerätes nach der Erfindung weist die Hubeinheit eine Hubführung mit Zahnstange auf, die mit einem motorisch antreibbaren Ritzel in Eingriff ist. Auf diese Weise lässt sich die Hubeinheit auf einfache Weise elektrisch steuern. Statt des Zahnstangentriebs könnte die Hubeinheit auch einen Zahnriementrieb oder eine Spindel/Mutter-Anordnung wie im eingangs geschilderten Stand der Technik aufweisen.

In einer weiteren Ausgestaltung des Kochgerätes nach der Erfindung ist der Deckel über eine Scharniereinrichtung an der Zahnstange angelenkt und in der Hubeinheit ist parallel zu der Zahnstange ein zwischen zwei Stellungen verfahrbarer Stempel angeordnet, mit dem der Deckel auf- und zuklappbar ist. Die Scharniereinrichtung ergibt so einen besonders einfach aufgebauten und besonders zuverlässig arbeitenden Klappmechanismus des Deckels.

In einer weiteren Ausgestaltung des Kochgerätes nach der Erfindung weist das Becken einen Wasserzulauf mit Durchlauferhitzer auf. Das erlaubt, das Wasser so heiß zuzuführen, dass die dem Becken zugeordnete regelbare Heizeinrichtung die Temperatur des Wassers nur noch geringfügig zu erhöhen hat, zum Beispiel von 85°C auf 100°C.

In einer weiteren Ausgestaltung des Kochgerätes nach der Erfindung weist das Becken einen Solezulauf auf. Das erlaubt, den erwünschten Wert des Salzgehaltes des bei dem Kochprozess eingesetzten Wasser einzustellen und aufrecht zu erhalten. Eine entsprechende Salzgehaltmesseinrichtung ist mit der elektronischen Steuerung des Kochgerätes verbunden.

In einer weiteren Ausgestaltung des Kochgerätes nach der Erfindung ist der Korb im Gastronorm- oder GN-Format bemessen. Mit Gastronorm wird die europäische Norm EN 631 bezeichnet. Der Korb ist bevorzugt so bemessen, dass wenigstens eine Portion Pasta gekocht werden kann, im Bedarfsfall aber auch bis zu drei oder vier Portionen. Eine dafür geeignete Korbgröße im GN-Format ist 1/3, bei einer Korbhöhe von 95 mm. Nötigenfalls kann der Korb aber auch im GN-Format 1/2 oder 1/1 bemessen sein, wenn grundsätzlich Bedarf besteht, mehr als drei bis vier Pastaportionen gleichzeitig zu kochen. Die Kochzeit bei einer Portion oder aber auch bei drei oder vier Portionen beträgt bei dem erfindungsgemäßen Kochgerät üblicherweise 3 Minuten. Ungeachtet dessen, ob eine oder drei oder vier Portionen Pasta gleichzeitig gekocht werden, kann die Energiezufuhr über die dem Becken zugeordnete regelbare Heizeinrichtung so eingestellt werden, dass diese Zeit durch mehr oder weniger zusätzliche Energiezufuhr eingehalten wird.

In einer weiteren Ausgestaltung des Kochgerätes nach der Erfindung besteht das Becken aus einem metallischen Mehrschichtmaterial. Ein solches Mehrschichtmaterial kann zum Beispiel entsprechend dem europäischen Patent Nr. 1 833 341 gewählt werden.

In einer weiteren Ausgestaltung des Kochgerätes nach der Erfindung ist die Heizeinrichtung eine elektrische Widerstandsheizeinrichtung. Eine solche Heizeinrichtung ist in Kombination mit einem Becken aus einem metallischen Mehrschichtmaterial besonders effizient. Der Einsatz einer Induktionsheizung ist ebenso möglich, wenn ein Becken aus induktionsfähigem Material gewählt wird.

In einer weiteren Ausgestaltung des Kochgerätes nach der Erfindung ist dem Becken eine Messeinrichtung für den Stärkegehalt des Kochwassers zugeordnet. Diese Ausgestaltung ist besonders hilfreich, wenn das Wasser nicht nach jedem Kochprozess erneuert wird, sondern erst nach mehreren Kochprozessen. Durch die Messung des Stärkegehaltes des Kochwassers kann dann noch zuverlässiger erreicht werden, dass es zu keiner starken Schaumbildung kommt.

In einer weiteren Ausgestaltung des Kochgerätes nach der Erfindung ist dieses als ein Tischgerät ausgebildet, das mit weiteren als Tischgerät ausgebildeten Kochgeräten in eine Nische eines varithek^{®}-Geräteträgers eines Kochzentrums oder in eine Nische einer Dunstabsaugvorrichtung passt. Ein geeignetes Kochzentrum ist Gegenstand des deutschen Patents Nr. 197 57 004 des Anmelders. Eine geeignete Dunstabsaugvorrichtung ist Gegenstand des europäischen Patents Nr. 1 194 721 des Anmelders. Bei dem Einsatz des Kochgerätes nach der Erfindung in dem vorgenannten Kochzentrum ist ein Geräteträger vorhanden und das Kochgerät nach der Erfindung wird als ein Einschub mit einem GN-Behälter entsprechenden Außenabmessungen konzipiert, so dass es in den Geräteträger statt eines GN-Behälters einsetzbar ist. Bei dem Einsatz des Kochgerätes nach der Erfindung in Kombination mit der vorgenannten Dunstabsaugvorrichtung wird eine Umweltbelastung durch Dampf und Geruchspartikel sicher vermieden. Mehrere Kochgeräte nach der Erfindung können auch gemeinsam in Kombination mit einer Dunstabsaugvorrichtung verwendet werden, die den Gegenstand des deutschen Patents Nr. 10 2004 042 158 des Anmelders bildet.

Ausführungsbeispiele der Erfindung werden im Folgenden unter Bezugnahme auf die Zeichnungen näher beschrieben. Es zeigt
- Fig. 1: in perspektivischer Darstellung ein als ein Pastakochgerät ausgebildetes Kochgerät nach der Erfindung in drei verschiedenen Betriebsphasen und mit geschlossenem und geöffnetem Deckel,
- Fig. 2: in Seitenansicht und teilweise im Schnitt das Pastakochgerät nach Fig. 1 in den gleichen Betriebsphasen und
- Fig. 3: das als ein Tischgerät ausgebildete Pastakochgerät nach den Fig. 1 und 2 gemeinsam mit weiteren als Tischgerät ausgebildeten Pastakochgeräten angeordnet in einer Nische einer Dunstabsaugvorrichtung.

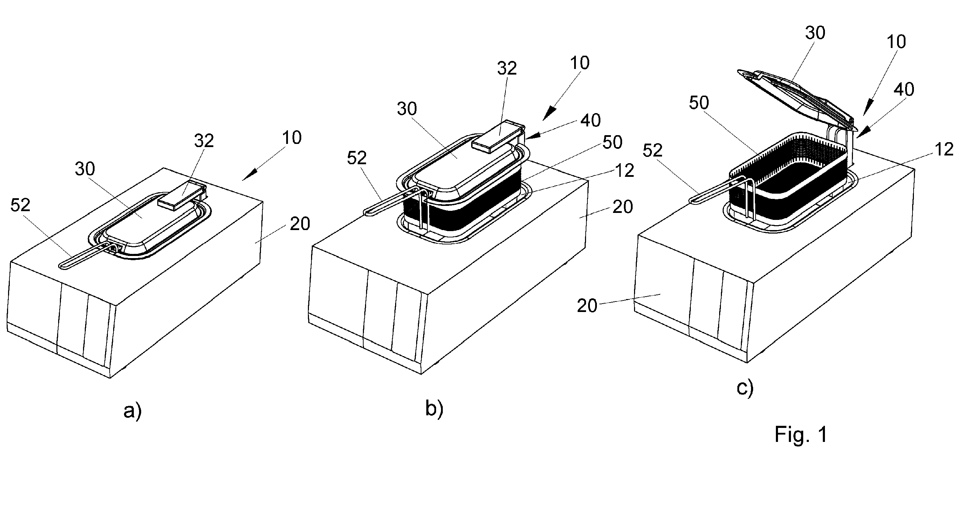

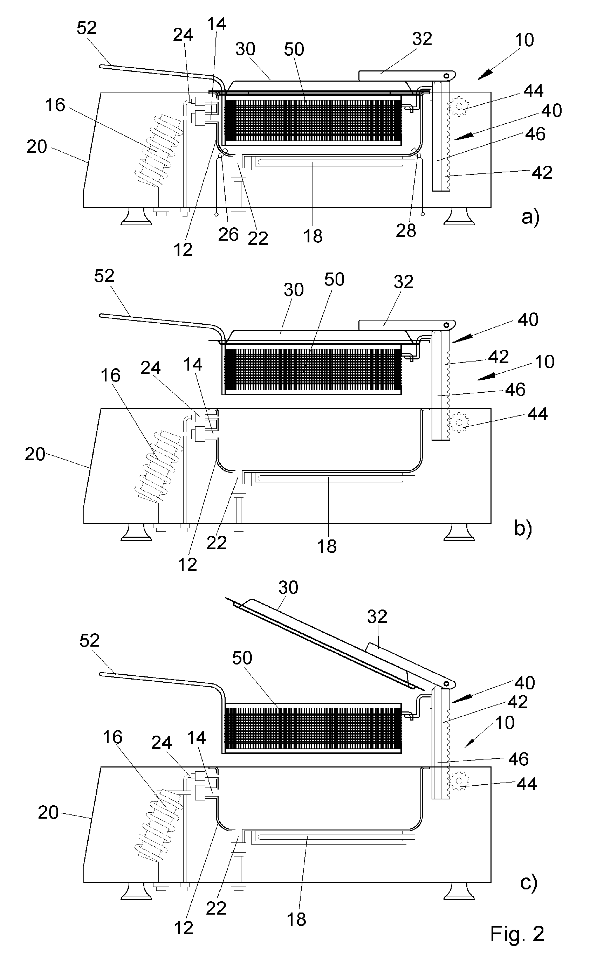

Die Fig. 1 und 2 zeigen ein Kochgerät, das hier in einer bevorzugten Ausführungsform der Erfindung als ein Pastakochgerät ausgebildet ist, welches insgesamt mit 10 bezeichnet ist. Das Pastakochgerät 10 hat ein Becken 12, welches über einen Wasserzulauf 14 mit einem vorgeschalteten Durchlauferhitzer 16 mit heißem Wasser befüllbar ist. Dem Becken 12 ist eine regelbare Heizeinrichtung 18 zugeordnet, bei welcher es sich in dem dargestellten Ausführungsbeispiel um eine elektrische Widerstandsheizeinrichtung handelt. Die Heizeinrichtung 18 ist an der Unterseite des Beckens an dessen Boden angeordnet. Das Pastakochgerät 10 hat eine zentrale elektronische Steuereinheit, die der Übersichtlichkeit halber in den Zeichnungen weggelassen worden ist. Alle vorstehend und im Folgenden beschriebenen Steuer- und Regelvorgänge werden durch diese elektronische Steuereinheit bewerkstelligt, auch wenn darauf im Einzelnen nicht jeweils zusätzlich nochmals hingewiesen wird.

Das Becken 12 ist in einem Gehäuse 20 des Pastakochgerätes 10 so befestigt, dass sein oberer Rand mit der Oberseite des Gehäuses 20 bündig ist, wie es in den Fig. 1 und 2 ohne weiteres zu erkennen ist. Das Becken hat einen Wasserablauf 22 und einen Solezulauf 24, wie es in Fig. 2 gezeigt ist. Weiter weist das Becken einen Temperaturfühler 26 und einen Stärkegehaltsfühler 28 auf, die jeweils ebenfalls an die nicht dargestellte elektronische Steuereinheit angeschlossen sind.

Das Pastakochgerät 10 hat einen Deckel 30 zum Verschließen des Beckens 12. Der Temperaturfühler 26 und der Stärkegehaltsfühler 28 sind der Einfachheit halber nur in Fig. 2a gezeigt. Das Pastakochgerät 10 hat eine insgesamt mit 40 bezeichnete Hubeinheit zum Absenken eines Korbes 50 in das Becken 12 und zum Hochfahren des Korbes 50 aus dem Becken 12. Die in den Fig. 1 und 2 gezeigten drei Betriebsphasen zeigen in den Fig. 1a und 2a das Pastakochgerät 10 in einer Betriebsphase, in welcher der Korb 50 in das Becken 12 abgesenkt und der Deckel 30 geschlossen ist. Die Fig. 1b und 2b zeigen den Korb 50 in einer Stellung, in welcher er aus dem Becken 12 hochgefahren ist. Schließlich zeigen die Fig. 1c und 2c eine Betriebsphase, in welcher bei hochgefahrenem Korb 50 der Deckel 30 geöffnet worden ist.

Der Deckel 30 ist über ein Scharnierband 32 an dem oberen Ende einer Zahnstange 42 der Hubeinheit 40 angelenkt. Die Zahnstange 42 ist mit einem Ritzel 44 in Eingriff, welches durch einen Motor (nicht dargestellt) angetrieben wird, der ebenfalls mit der elektronischen Steuereinheit verbunden ist.

Der Korb 50 ist im GN-Format bemessen und hat die Größe GN 1/3 und eine Höhe von 95 mm, womit er für das Zubereiten von 1 bis 3 oder maximal 4 Portionen Pasta bemessen ist.

Das Becken 12 besteht aus einem metallischen Mehrschichtmaterial und ist innen mit einer teflonfreien Antihaftbeschichtung vom Typ Duratec^{®} versehen. Diese Ausbildung des Beckens 12 ermöglicht eine effiziente Energieeinbringung von der Heizeinrichtung 18 aus und eine gute Aufrechterhaltung einer einmal erreichten Solltemperatur des Pastakochwassers. Die Heizeinrichtung 18 umfasst einen herkömmlichen Rohrheizkörper oder eine Widerstandsdrahtwendel. Die Heizeinrichtung 18 ist eine elektrische Widerstandsheizeinrichtung.

Der Stärkegehaltsfühler 28 ist Teil einer dem Becken 12 zugeordneten Messeinrichtung für den Stärkegehalt des Kochwassers. Der Stärkegehaltsfühler 28 liefert sein Ausgangssignal an die elektronische Steuereinheit, welche dafür sorgt, dass bei dem Erreichen eines bestimmten Stärkegehalts das Kochwasser gewechselt wird. Bevorzugt wird das Kochwasser für eine Einzelportion benutzt, es kann aber, wenn es die Stärkegehaltsmessung zulässt, für mehrere Portionen und mehrere Kochvorgänge benutzt werden.

Die Hubeinheit 40 ist so ausgebildet, dass, sobald der Korb 50 bei geschlossenem Deckel die Stellung nach den Fig. 1b und 2b erreicht hat, der Deckel 30 aufgeklappt wird. Zu diesem Zweck ist in der Hubeinheit 40 parallel zu der Zahnstange 42 ein Stempel 46 angeordnet, der aus einer Stellung nach Fig. 2b in eine Stellung nach Fig. 2c elektrisch oder mechanisch hochfahrbar ist, um den Deckel 30 aufzuklappen. In der in Fig. 2c gezeigten Stellung kann der Korb 50 zum Entleeren von der Hubeinheit 40 abgenommen und dann wieder an der Hubeinheit 40 eingehängt werden. Das Schließen des Deckels 30 spielt sich dann in der umgekehrten Reihenfolge ab. Gemäß Fig. 2b wird der Deckel 30 wieder auf den Korb 50 geklappt. Dann wird gemäß Fig. 2a der Korb 50 wieder abgesenkt, wobei sich der Deckel 30 mit seinem äußeren Rand auf den oberen Rand des Beckens 12 auflegt.

Der Deckel 30 ist im Bereich eines Griffes 52 so ausgespart, dass während des Kochens Dampf entweichen kann, so dass sich unter dem Deckel 30 kein Dampfüberdruck ausbilden kann.

Das Pastakochgerät 10 arbeitet folgendermaßen:
Über den Durchlauferhitzer 16 und den Wasserzulauf 14 wird heißes Wasser mit ca. 85° C in das Becken 12 eingeleitet. Zugleich wird über den Solezulauf 24 eine Salzsole in das Becken 12 eingeleitet. Mit Hilfe der Heizeinrichtung 18 wird das Wasser in dem Becken 12 auf 100° C hochgeheizt. Der Korb 50 befindet sich dabei in seiner Position nach den Fig. 1c, 2c, in welcher der Deckel 30 geöffnet ist. Sobald das Wasser kocht, wird die benötigte Portion Pasta in den Korb 50 getan. Der Koch drückt die Starttaste, der Korb 50 wird in das Becken 12 abgesenkt und der Deckel 30 wird geschlossen. Die zentrale elektronische Steuereinheit oder eine manuell eingestellte Zeitschaltuhr sorgen dafür, dass die in dem Korb 50 befindliche Pasta nun für drei Minuten gekocht wird. Danach wird das Wasser über den Wasserablauf 22 abgelassen und der Korb 50 in die Stellung nach den Fig. 1b, 2b und weiter in die Stellung 1 c, 2c hochgefahren. Die fertig gekochte Pasta kann nun mit dem Korb 50 auf den Teller ausgeleert werden.

Das Pastakochgerät 10 kann auch als Dampfgarer eingesetzt werden. In diesem Fall ist es lediglich erforderlich, das Becken 12 nur so weit mit Wasser zu füllen, dass sich der Korb 50 mit seiner Unterseite oberhalb des Wasserspiegels befindet. Das Gargut wird in den Korb 50 eingebracht und bei geschlossenem Deckel 30 in dem dann gebildeten Dampf gegart. Theoretisch ist sogar der Einsatz des Pastakochgerätes als Friteuse möglich. Für den Dampfgarbetrieb wird kein Überdruck benötigt, weshalb der Deckel 30 im Bereich des Griffes 52 wie erwähnt ausgeschnitten sein kann.

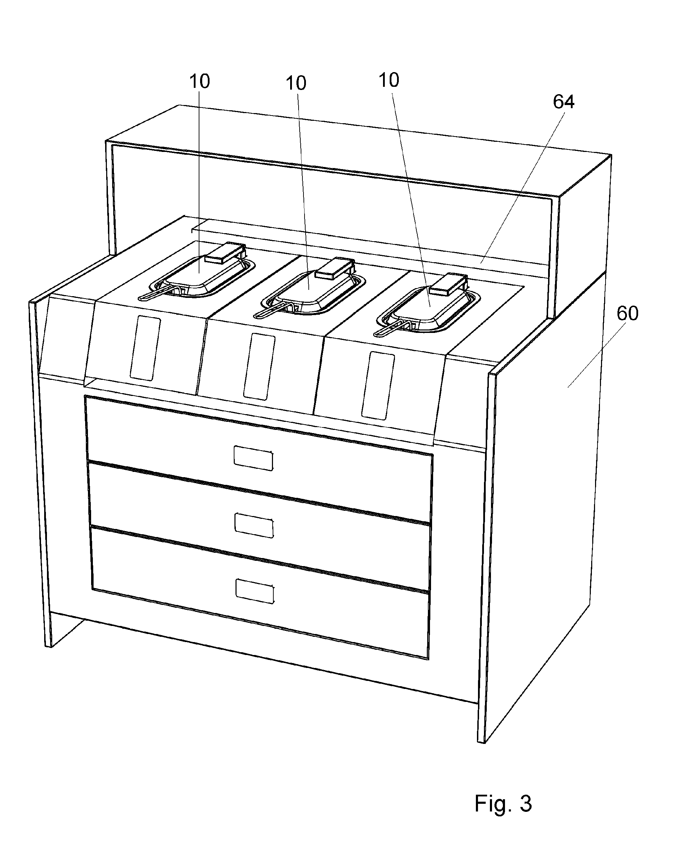

Fig. 3 zeigt das als ein Tischgerät ausgebildete Pastakochgerät 10 nach den Fig. 1 und 2 gemeinsam mit zwei weiteren als Tischgerät ausgebildeten Pastakochgeräten 10 in einer Nische 62 einer Dunstabsaugvorrichtung 60. Die Dunstabsaugung erfolgt über einen Schlitz 64. Die gereinigte Abluft tritt an der Unterseite der Dunstabsaugvorrichtung 60 aus. Die Kombination des Pastakochgerätes 10 mit der Dunstabsaugvorrichtung 60 verhindert eine Umweltbelastung durch Dampf und Geruch.

### Bezugszeichenliste

- 10: Pastakochgerät
- 12: Becken
- 16: Durchlauferhitzer
- 18: Heizeinrichtung
- 20: Gehäuse
- 22: Wasserablauf
- 24: Solezulauf
- 26: Temperaturfühler
- 28: Stärkegehaltsfühler
- 30: Deckel
- 32: Scharnierband
- 42: Zahnstange
- 44: Ritzel
- 46: Stempel
- 50: Korb
- 52: Griff
- 60: Dunstabsaugvorrichtung
- 62: Nische
- 64: Schlitz

## Patentansprüche

1. Kochgerät für Pasta oder Teigwaren,
mit einem Becken, das mit Wasser befüllbar ist,
mit einer dem Becken zugeordneten regelbaren Heizeinrichtung,
mit einem Deckel zum Verschließen des Beckens und
mit einer Hubeinheit zum gemeinsamen Absenken eines Korbes und des Deckels in bzw. auf das Becken sowie zum gemeinsamen Hochfahren des Korbes und des Deckels aus bzw. von dem Becken,
**dadurch gekennzeichnet, dass** der Deckel (30) mit der Hubeineinheit (40) so gekuppelt und die Hubeinheit (40) so ausgebildet ist, dass mittels der Hubeinheit (40) der Deckel (30) auf den Korb (50) klappbar und von dem Korb (50) hochklappbar ist.

2. Kochgerät nach Anspruch 1, **dadurch gekennzeichnet, dass** die Hubeinheit (40) eine Hubführung mit Zahnstange (42) aufweist, die mit einem motorisch antreibbaren Ritzel (44) in Eingriff ist.

3. Kochgerät nach Anspruch 2, **dadurch gekennzeichnet, dass** der Deckel (30) über eine Scharniereinrichtung an der Zahnstange (42) angelenkt ist und dass in der Hubeinheit (40) parallel zu der Zahnstange (42) ein zwischen zwei Stellungen verfahrbarer Stempel (46) angeordnet ist, mit dem der Deckel (30) auf- und zuklappbar ist.

4. Kochgerät nach einem der vorhergehenden Ansprüche, **dadurch gekennzeichnet, dass** das Becken (12) einen Wasserzulauf (14) mit Durchlauferhitzer (16) aufweist.

5. Kochgerät nach einem der vorhergehenden Ansprüche, **dadurch gekennzeichnet, dass** das Becken (12) einen Solezulauf (24) aufweist.

6. Kochgerät nach einem der vorhergehenden Ansprüche, **dadurch gekennzeichnet, dass** der Korb (50) im GN-Format bemessen ist.

7. Kochgerät nach einem der vorhergehenden Ansprüche, **dadurch gekennzeichnet, dass** das Becken (12) aus einem metallischen Mehrschichtmaterial besteht.

8. Kochgerät nach einem der vorhergehenden Ansprüche, **dadurch gekennzeichnet, dass** die Heizeinrichtung (18) eine elektrische Widerstandsheizeinrichtung ist.

9. Kochgerät nach einem der vorhergehenden Ansprüche, **dadurch gekennzeichnet, dass** dem Becken (12) eine Messeinrichtung (28) für den Stärkegehalt des Kochwassers zugeordnet ist.

10. Kochgerät nach einem der vorhergehenden Ansprüche, **dadurch gekennzeichnet, dass** das Kochgerät (10) als ein Tischgerät ausgebildet ist, das mit weiteren als Tischgerät ausgebildeten Kochgeräten (10) in eine Nische (62) eines Kochzentrums oder einer Dunstabsaugvorrichtung (60) passt.
